# EUROPEAN PATENT SPECIFICATION

(11) **EP 1 744 851 B1**
(45) Date of publication and mention of the grant of the patent: **22.09.2010**
(21) Application number: 05738364.8
(22) Date of filing: 28.04.2005
(51) Int. Cl.: B23K 11/30, B23K 35/02, B23K 11/06

(54) **METHOD AND ARRANGEMNT FOR SEAM WELDING OF METAL SHEETS**
VERFAHREN UND ANORDNUNG ZUM NAHTSCHWEISSEN VON BLECHEN
PROCEDE ET AGENCEMENT DE SOUDAGE CONTINU DE PLAQUES DE METAL

(30) Priority: 29.04.2004 EP 04076277
(43) Date of publication of application: 24.01.2007
(73) Proprietor: Aleris Aluminum Duffel BVBA, 2570 Duffel (BE)
(72) Inventor: SMEYERS, Axel, B-2220 Heist Op den Berg (BE); VAN RIJKOM, Jacobus, NL-2071 KA Santpoort-Noord (NL); SMITH, Sullivan, Manning, NL-1941 Be Beverwijk (NL)
(74) Representative: Müller, Frank Peter
(86) International application number: PCT/EP2005/004639
(87) International publication number: WO 2005/105358

(56) References cited:
- WO-A-99/14008
- GB-A- 910 206
- GB-A- 2 096 038
- US-A- 4 886 953
- US-A- 5 552 573

## Description

### FIELD OF THE INVENTION

The invention relates to a method and an arrangement for seam welding two sheets of metal in an overlap configuration at a welding zone with the use of two rotating welding electrodes, wherein elements of an electrically conducting material are placed between each welding electrode and the welding zone.

### BACKGROUND OF THE INVENTION

Such a method is known from the international application WO-99/14008. This patent application describes a method for seam welding two metal sheets in amongst others an overlap configuration, in which the elements of an electrically conducting material placed between each welding electrode and the welding zone comprise metal sheets with a higher melting point than the metal sheets to be welded.

Although this known method allows for the achievement of a reliable weld seam quality, while welding at a high speed and without the necessity of any surface preparation of the metal sheets to be welded, this known method also suffers from a number of drawbacks. The use of the mentioned metal sheets between the welding electrodes and the welding zone only allows the production of straight welds and welding flat sheets only. Positioning and removing the metal sheets reduces the productivity of the known method. The positioning of the sheets of material to be welded is critical to keep the welding electrodes centralised and aligned above the metal sheets. Any deviation from the correct position may result in defective weld seams or incorrectly positioned weld seams. For a compensation of a deviation of the position of the welding electrodes relative to the centre of the metal sheets, wide and thick metal sheets have to be used. Further, during the welding process material coming from the metal sheets to be welded will stick to the metal sheets, thus preventing an easy re-use of the metal sheets for a successive welding operation. In practice, the metal sheets will be discarded after finishing a welding operation, leading to high volumes of waste material.

GB-910,206-A discloses a resistance welding machine for continuous welding of sheet metal, in particular tin-plated, zinc-plated, cadmium-plated iron sheet, and of aluminium or brass, including a first electrode in the form of a roller over which is led a wire which forms the surface of engagement of the electrode with the work, the wire being in surface contact with the electrode and having a curved surface which will form a small-area contact with the work, a second electrode in the form of a roller over which is led a second wire which forms the surface of engagement of the second electrode with the work. The known welding machine is for the manufacture of cans.

### SUMMARY OF THE INVENTION

It is an object of the present invention to provide an improved method for seam welding in accordance with the preamble of the main claim, in which one or more of the discussed drawbacks are eliminated in an easy, yet nevertheless effective manner.

In accordance with the present invention, there is provided a method for seam welding two sheets of metal in an overlap configuration at a welding zone with the use of two rotating welding electrodes, wherein elements of an electrically conducting material are placed between each welding electrode and the welding zone, and wherein these elements comprise wire material and whereby the sheets of metal are aluminium or aluminium alloy sheets and the wire material comprises steel wires, and preferably the steel wires are devoid of a surface coating or coated layers.

An important field in which the present invention may be applied, is the production of aluminium fuel tanks for vehicles. With the inventive seam welding method complex fuel tanks can be produced in high volumes out of aluminium alloy sheet, without the risk of obtaining defective fuel tanks (especially fuel tanks which are not emission-tight or even worse, namely fuel tanks which are not completely fuel-tight). When applied to welding aluminium sheets, the method according to the present invention combines the advantages of classical seam welding (rotating welding electrodes that do not only take care of the welding process, but simultaneously do serve as a strong and reliable clamping device eliminating gaps between the sheets of material, especially when those sheets of material are not completely flat at the welding zone) with the advantages of the provision of the mentioned elements between each welding electrode and the welding zone (preventing a reaction between the aluminium and the welding electrodes which would result in a material removal from the weld and an aluminium pick-up on the loading electrodes and, thus, a negative influence on the weld quality). A further advantage is that it adds the specific advantage of allowing the formation of weld seams having substantially any desired shape.

As a result of the use of wire material as the elements placed between each welding electrode and the welding zone, a productive and flexible welding process is realised that allows the production of curved welds in a flexible and reliable manner. Sharp corners may be navigated, and profiled or hollow members with relatively small or profiled flanges can be joined by the welding process. The problem of positioning the welding electrodes in relation to said element does no longer occur, whereas a large scale material wastage does not occur anymore. As a result, the seam welding method according to the present invention also more cost effective.

### DETAILED DESCRIPTION OF THE PREFERRED EMBODIMENTS

In a preferred embodiment of the method according to the present invention, the wire material is guided around part of the circumference of the electrodes, such as to contact the sheets of material to be welded only substantially in the welding zone. Guiding the wire material in such a manner during the welding process further increases the manoeuvrability, such that weld seams may be created having extremely curved shapes. Further this feature ensures, that a melting of the sheets of material to be welded will only occur in a restricted welding zone (due to a resistive and conductive heating of the weld zone).

In one specific embodiment, the wire material has a circular cross-section which during the welding is flattened. Of course, in such an embodiment, the wire material should allow such a flattening or deformation.

However, it is possible too that the wire material has a profiled cross-section, e.g. a substantially rectangular cross-section.

It is emphasised, that the cross-section of the wire material may be selected based upon the specific welding process to be carried out. Thus, any profiling of the wire material is conceivable.

When, in accordance with yet another embodiment of the method according to the present invention, the rotating welding electrodes have a circumferential recess with a cross-section which is at least partially complementary to the cross-section of the wire material, guiding the wire material around the rotating welding electrodes occurs in a very reliable manner.

Preferably, immediately behind the electrodes a cooling of the welding zone is performed. Such a cooling ensures a solidification of the material in the welding zone before the wire material is guided around the welding electrodes away from the welding zone.

Such a cooling may be performed by supplying a cooling fluid, such as air, water etc., and optionally by using means for forced cooling.

The results of the method according to the present invention can be further improved when the welding current is supplied to the electrodes by means of a 50 Hz AC power source.

However, it is more preferred that the welding current is supplied to the electrodes using a medium frequency transformer. As a result the welding process may be even more stable, while at the same time enlarging the range of admissible welding process parameters.

When carrying out the welding method in accordance with the present invention, a number of parameters have to be controlled, depending on several conditions. For example, the welding force and minimum width of the used wire material are critical parameters in avoiding a pressing-out of the molten material of the welding zone underneath the welding electrodes as a result of a too high pressure. On the other hand, the welding pressure should not be too low to avoid the formation of pores in the weld seam. Too many pores, and more precisely a clustering of pores, may cause fatigue (and in the event of a fuel tank leakage problems), and thus should be avoided. Also the choice of the secondary weld current seems to have an influence on the quality of the obtained weld seam.

Apart from the advantages mentioned before, the method in accordance with the present invention further has the advantage that no filler wire is necessary. In this manner, additions of other elements as already present in the materials to be welded are avoided, which should avoid corrosion problems caused by potential differences when the uncoated weld seam comes into contact with foreign matter (for example fuel inside a fuel tank or water, wet dirt coming from the street, etc.).

In a further aspect of the invention it relates to a welding arrangement that allows for the use of the method according to the invention.

### BRIEF DESCRIPTION OF THE DRAWINGS

The foregoing and other features and advantages of the method according to the present invention will become readily apparent from the detailed description of an embodiment as further described by the appended drawings:
Fig. 1 shows, schematically and in a perspective view, two overlapping metal sheets being welded together with the use of two rotating welding electrodes, and
Fig. 2 shows a side elevational view belonging to the illustration of Fig. 1.

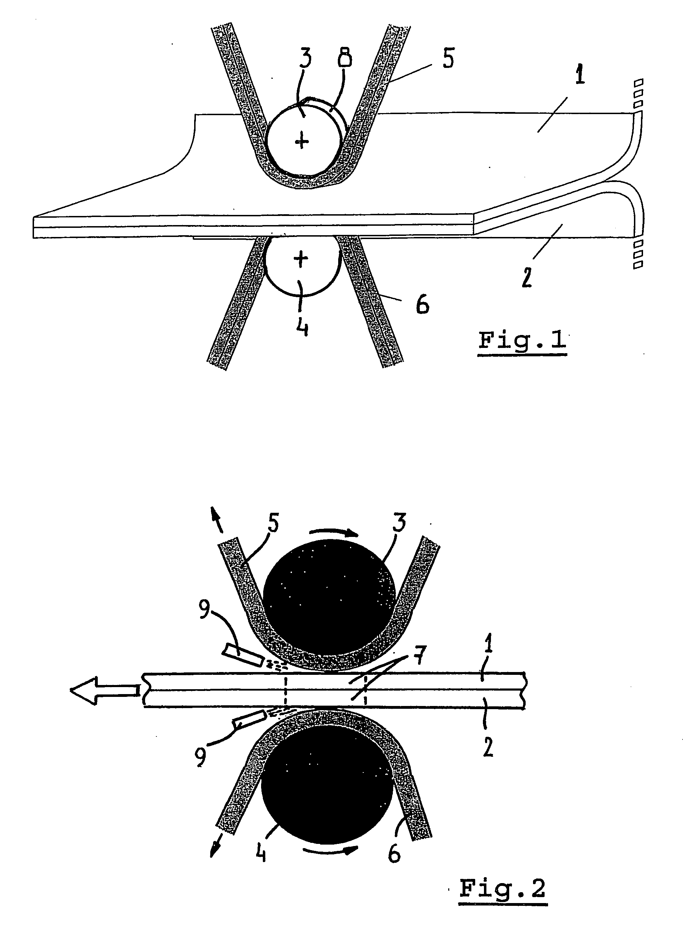

Referring to Fig. 1, two metal sheets 1, 2 are shown in an overlap configuration. For example, these two metal sheets are aluminium or aluminium alloy sheets which are part of a fuel tank of a vehicle. In such an application these aluminium alloy sheets have typically a gauge of up to 3mm.

At opposite sides of the sheets of material 1, 2 two rotating welding electrodes 3, 4 are positioned. In a manner known per se but not shown, the welding electrodes are connected to a source of electrical current.

Between the welding electrode 3 and metal sheet 1 a wire 5 is positioned, whereas likewise between electrode 4 and sheet of material 2 a wire 6 is positioned. Said wires are steel wires devoid of any surface coating or coated layers.

As illustrated, the wires 5 and 6 are guided around part of the circumference of the electrodes 3, 4 such as to contact the metal sheets 1 and 2 only substantially in a welding zone 7 (best illustrated in Fig. 2).

In the illustrated embodiment the wires 5 and 6 have a rectangular cross-section, wherein the welding electrodes 3 and 4 have a circumferential recess 8 with a cross-section which is at least partially complementary to the cross-section of the wires 5, 6.

Referring to Fig. 2, immediately behind the electrodes 3 and 4 nozzles 9 are shown which supply a cooling fluid, such as air, water or alike, to the welding zone 7.

The method according to the invention occurs in the following manner. In their overlapping configuration the metal sheets 1 and 2 are introduced into the gap between the welding electrodes 3 and 4. Simultaneously the wires 5 and 6 are supplied to the welding electrodes and are guided around part of the circumference thereof.

The welding electrodes 3 and 4 are, in a manner known per se but not shown in detail, connected to a power source for an electrical current. The electrical current is conducted through the wires 5 and 6 into the sheets 1 and 2, such that a resistive and conductive heating of the welding zone 7 occurs. As a result, the material of the metal sheets 1, 2 melts at the welding zone 7. The fluid supplied by the nozzles 9 solidifies the molten material of the sheets 1, 2 immediately behind the electrodes 3 and 4, thus limiting the welding zone 7 to a region between the electrodes 3 and 4.

The supplied wires 5 and 6 also can have a circular cross-section which is flattened on the welding installation prior to coming into contact with the metal sheets 1, 2, thus increasing the contact surface between the metal sheets and the wires 5,6.

It is possible, that the metal sheets 1, 2 are driven by driving means not illustrated. However, it is also conceivable, that the rotating welding electrodes 3, 4 and/or the wires 5, 6 are driven, and thus take care of the movement of the sheets 1 and 2. The skilled person will recognise that basically, any of the combined metal sheets 1, 2, rotating welding electrodes 3, 4 and wires 5, 6 may be a driven element or a driving element for continuous synchronous transport of the relevant features with respect to each other.

The invention is not limited to the embodiment described before, which may be varied widely within the scope of the invention as defined by the appending claims.

## Claims

1. Method for seam welding two sheets of material (1,2) in an overlap configuration at a welding zone (7) with the use of two rotating welding electrodes (3,4), wherein elements (5,6) of an electrically conducting material are placed between each welding electrode and the welding zone, wherein the metal sheets are aluminium sheets, **characterized in that** these elements (5,6) comprise steel wire material which is devoid of a surface coating or coated layers.

2. Method according to claim 1, wherein the steel wire material is guided around part of the circumference of the electrodes, such as to contact the sheets of material to be welded only substantially in the welding zone.

3. Method according to one of the previous claims, wherein the steel wire material has a circular cross-section which during welding is flattened or deformed.

4. Method according to claims 1 or 2, wherein the steel wire material has a profiled cross-section.

5. Method according to any one of the previous claims,
wherein the rotating welding electrodes have a circumferential recess with a cross-section which is at least partially complementary to the cross-section of the steel wire material.

6. Method according to any one of the previous claims,
wherein immediately behind the electrodes a cooling of the welding zone is performed.

7. Method according to claim 6, wherein the cooling is performed by supplying a cooling fluid.

8. Method according to any one of the previous claims,
wherein a welding current is supplied to the electrodes by means of a 50 Hz AC power source.

9. Method according to any one of the previous claims,
wherein a welding current is supplied to the electrodes using a medium frequency transformer.

10. Method of welding two aluminium alloy sheets forming part of a fuel tank for a vehicle, and wherein the method comprising the steps according to any one of the previous claims 1 to 9.

11. Welding arrangement for seam welding of two aluminium or aluminium alloy sheets of material (1, 2) in an overlap configuration at a welding zone (7), the arrangement comprising two rotating welding electrodes (3, 4) and elements (5, 6) of an electrically conducting material to be placed between each welding electrode and the welding zone,
**characterized in that** these
elements (5, 6) comprise steel wire material, and **in that** the steel wire material is devoid of a coated surface.

12. Welding arrangement according to claim 11, and wherein there are driving means for continuous synchronous transport of the steel wires to bring fresh surface of the wires into engagement with the aluminium alloy sheets as it passes between rotating welding electrodes.

## Patentansprüche

1. Verfahren zum Nahtschweißen von zwei Materialplatten (1,2) in einer überlappenden Anordnung in einer Schweißzone (7) durch Verwendung von zwei drehbaren Schweißelektroden (3,4), bei dem Elemente (5,6) eines elektrisch leitenden Materials zwischen jeder Schweißelektrode und der Schweißzone angeordnet sind, wobei die Metallplatten Aluminiumplatten sind, **dadurch gekennzeichnet, dass** diese Elemente (5,6) ein Stahldrahtmaterial umfassen, welches frei von einer Oberflächenbeschichtung oder überzogenen Schichten ist.

2. Verfahren nach Anspruch 1, bei dem das Stahldrahtmaterial um einen Teil des Umfangs der Elektroden geführt wird, so dass die zu verschweißenden Materialplatten nur im Wesentlichen in der Schweißzone kontaktiert werden.

3. Verfahren nach einem der vorhergehenden Ansprüche, bei dem das Stahldrahtmaterial einen kreisförmigen Querschnitt aufweist, der während des Schweißens abgeflacht oder verformt wird.

4. Verfahrnen nach Anspruch 1 oder 2, bei dem das Stahldrahtmaterial einen Profilquerschnitt aufweist.

5. Verfahren nach einem der vorhergehenden Ansprüche, bei dem die drehbaren Schweißelektroden eine umlaufende Ausnehmung mit einem Querschnitt aufweisen, der zumindest teilweise zu dem Querschnitt des Stahldrahtmaterials komplementär ist.

6. Verfahren nach einem der vorhergehenden Ansprüche, bei dem gleich hinter den Elektroden ein Kühlen bzw. Abkühlen der Schweißzone durchgeführt wird.

7. Verfahren nach Anspruch 6, bei dem das Abkühlen durch Zuführen eines Kühlfluids durchgeführt wird.

8. Verfahren nach einem der vorhergehenden Ansprüche, bei dem den Elektroden ein Schweißstrom mittels einer 50 Hz Wechselstromquelle zugeführt wird.

9. Verfahren nach einem der vorhergehenden Ansprüche, bei dem den Elektroden ein Schweißstrom durch Verwenden eines Mittelfrequenztransformators zugeführt wird.

10. Verfahren zum Schweißen von zwei Aluminiumlegierungsplatten, die Teil eines Treibstofftanks für ein Kraftfahrzeug bilden, und bei dem das Verfahren die Schritte gemäß einem der vorhergehenden Ansprüche 1 bis 9 umfasst.

11. Schweißanordnung zum Nahtschweißen von zwei Aluminium- oder Aluminiumlegierungsmaterialplatten (1,2) in einer überlappenden Anordnung in einer Schweißzone (7), wobei die Anordnung zwei drehbare Schweißelektroden (3,4) und Elemente (5,6) eines elektrisch leitenden Materials, das zwischen jede Schweißelektrode und die Schweißzone angeordnet werden soll, umfasst, **dadurch gekennzeichnet, dass** diese Elemente (5,6) ein Stahldrahtmaterial umfassen, und dass das Stahldrahtmaterial frei von einer überzogenen Oberfläche ist.

12. Schweißanordnung nach Anspruch 11, bei der Antriebsmittel für den kontinuierlichen synchronen Transport der Stahldrähte vorhanden sind, um unverbrauchte Oberfläche der Drähte mit den Aluminiumlegierungsplatten in Eingriff zu bringen, sowie sie zwischen den drehbaren Schweißelektroden hindurchgeführt wird.

## Revendications

1. Procédé pour le soudage en continu de deux tôles de matériaux (1, 2) dans une configuration en chevauchement au niveau d'une zone de soudage (7) en utilisant deux électrodes de soudage rotatives (3, 4), dans lequel des éléments (5, 6) en matériaux électriquement conducteurs sont placés entre chaque électrode de soudage et la zone de soudage, dans lequel les tôles métalliques sont des tôles d'aluminium,
**caractérisé en ce que** ces éléments (5, 6) comprennent un matériau en fil d'acier qui est dépourvu de revêtement de surface ou de couches de revêtement.

2. Procédé selon la revendication 1, dans lequel le matériau en fil d'acier est guidé autour d'une partie de la circonférence des électrodes, de manière à venir en contact avec les tôles de matériaux à souder sensiblement uniquement dans la zone de soudage.

3. Procédé selon l'une des revendications précédentes, dans lequel le matériau en fil d'acier présente une section transversale circulaire qui est aplatie ou déformée pendant le soudage.

4. Procédé selon les revendications 1 ou 2, dans lequel le matériau en fil d'acier présente une section transversale profilée.

5. Procédé selon l'une quelconque des revendications précédentes, dans lequel les électrodes de soudage rotatives ont un évidement circonférentiel avec une section transversale qui est au moins partiellement complémentaire de la section transversale du matériau en fil d'acier.

6. Procédé selon l'une quelconque des revendications précédentes, dans lequel un refroidissement de la zone de soudage est exécuté immédiatement derrière les électrodes.

7. Procédé selon la revendication 6, dans lequel le refroidissement est exécuté en fournissant un fluide de refroidissement.

8. Procédé selon l'une quelconque des revendications précédentes, dans lequel un courant de soudage est fourni aux électrodes au moyen d'une source de puissance en courant alternatif à 50 Hz.

9. Procédé selon l'une quelconque des revendications précédentes, dans lequel un courant de soudage est fourni aux électrodes en utilisant un transformateur à fréquence moyenne.

10. Procédé de soudage de deux tôles en alliage d'aluminium qui font parti d'un réservoir de carburant pour un véhicule, dans lequel le procédé comprend les étapes selon l'une quelconque des revendications précédentes 1 à 9.

11. Agencement de soudage pour le soudage en continu de deux tôles en aluminium ou en alliage d'aluminium (1, 2) dans une configuration en chevauchement au niveau d'une zone de soudage (7), l'agencement comprenant deux électrodes de soudage rotatives (3, 4), et des éléments (5, 6) d'un matériau électriquement conducteur à placer entre chaque électrode et la zone de soudage,
**caractérisé en ce que** ces éléments (5, 6) comprennent un matériau en fil d'acier, et **en ce que** le matériau en fil d'acier est dépourvu de surface revêtue.

12. Agencement de soudage selon la revendication 11, dans lequel sont prévus des moyens d'entraînement pour un transport synchrone continu des fils d'acier afin d'amener une surface fraîche des fils en engagement avec les tôles d'alliage d'aluminium lorsqu'elles passent entre les électrodes de soudage rotatives.
